# EUROPÄISCHE PATENTSCHRIFT

(11) **EP 0 901 635 B1**
(45) Veröffentlichungstag und Bekanntmachung des Hinweises auf die Patenterteilung: **02.02.2005**
(21) Anmeldenummer: 97920691.9
(22) Anmeldetag: 16.04.1997
(51) Int. Cl.: G01P 3/487, G01M 17/02, G01L 5/00

(54) **VORRICHTUNG ZUR ERMITTLUNG DES DREHVERHALTENS EINES FAHRZEUGRADES**
DEVICE FOR DETECTING THE ROTARY BEHAVIOUR OF A VEHICLE WHEEL
DISPOSITIF POUR DETECTER LE COMPORTEMENT EN ROTATION D'UNE ROUE DE VEHICULE

(30) Priorität: 22.05.1996 DE 19620581
(43) Veröffentlichungstag der Anmeldung: 17.03.1999
(73) Patentinhaber: Continental Teves AG & Co. oHG, 60488 Frankfurt (DE)
(72) Erfinder: LOHBERG, Peter, D-61381 Friedrichsdorf (DE)
(74) Vertreter: Graf, Ulrich
(86) Internationale Anmeldenummer: PCT/EP1997/001885
(87) Internationale Veröffentlichungsnummer: WO 1997/044673

(56) Entgegenhaltungen:
- DE-A- 4 435 160
- US-A- 3 750 120
- PATENT ABSTRACTS OF JAPAN vol. 011, no. 026 (P-539), 24.Januar 1987 & JP 61 198063 A (ISEKI & CO LTD), 2.September 1986,

## Beschreibung

Die Erfindung bezieht sich auf eine Vorrichtung zur Ermittlung des Drehverhaltens eines Fahrzeugsrades nach dem Oberbegriff von Anspruch 1.

Die japanische Offenlegungsschrift JP 61 198 063 A offenbart eine gattungsgemäße Vorrichtung zur Messung der Fahrzeuggeschwindigkeit, des Schlupfes oder dergleichen mit einem Encoder, der mit dem Rad umläuft und permanentmagnetische Areale enthält, die in Umfangsrichtung des Rades gleichmäßig verteilt angeordnet sind. Die permanentmagnetischen Areale sind entweder in die Reifenwandung des Fahrzeugrades eingelagert oder auf der Reifenwandung aufgebracht. Die Sensierung der Drehbewegung des Encoders erfolgt über einen stationären, magnetfeldempfindlichen Meßwertaufnehmer, der als magnetischer Nährungsschalter ausgebildet ist und ein die Drehbewegung darstellendes Signal liefert, das mittels einer elektrischen Schaltung ausgewertet wird.

Eine weitere Vorrichtung zur Erfassung von Dreh- oder Winkelbewegungen ist aus der WO 95/17680 bekannt. Diese Meßvorrichtung enthält einen Meßwertgeber in Form eines Encoders, der mit dem Rad rotiert und eine Vielzahl von permanentmagnetischen Arealen besitzt, die in gleichmäßiger Verteilung in Drehrichtung über den gesamten Umfang des Encoders angeordnet sind. Als Meßwertaufnehmer ist ein aktives Meßelement an der Peripherie des Encoders stationär derart angeordnet, daß die Änderungen des Magnetfeldes infolge der Drehbewegung Signale am Ausgang des Meßelementes bzw. Meßwertaufnehmers hervorrufen, die diese Drehbewegung wiedergeben.

Passive und aktive Meßvorrichtungen zur Ermittlung des Drehverhaltens von Fahrzeugrädern sind in großer Anzahl und großer Vielfalt bekannt. Ein die Drehbewegung darstellendes elektrisches Signal wird unter anderem als Eingangsgröße von Kraftfahrzeug-Regelungssystemen, wie Antiblockiersystemen (ABS), Antriebsschlupfregelungen (ASR), Fahrstabilitätsregelungen (FDR, ASMS) etc. benötigt. Für diese Anwendungsfälle ist neben der zuverlässigen Arbeitsweise der erforderliche Herstellungsaufwand von entscheidender Bedeutung, zumal die meisten Systeme mehrere Sensoren, nämlich für jedes Fahrzeugrad einen individuellen Drehzahlsensor, benötigen. Die Suche nach einem besonders preiswerten Sensor ist daher Gegenstand intensiver Entwicklungsarbeiten.

Aus der deutschen Offenlegungsschrift DE 44 35 160 A1 ist eine Vorrichtung zur Bestimmung von Antriebs- und Bremskräften bzw. zur Griffigkeit des Untergrundes bekannt, bei der an der Reifenwandung magnetische Geberelemente angeordnet sind. Diese Geberelemente stellen keinen Encoder für die Messung der Drehbewegung eines Rades dar. Der Schlupf des Rades als Ausgangsbasis für eine schlupfgeregelte Bremsanlage muß gemäß dieser Offenbarung anderweitig ermittelt werden.

Aus der Patentschrift US 3,750,120 ist es bekannt, magnetisierbares Material in Form von Magnetitpulver in die Wandung eines Fahrzeugreifens einzulagern, das bei der Herstellung des Reifens mit einem magnetischen Code versehen wird, auf dem Informationen wie Herstellungsdatum und Größe ablesbar sind.

Der vorliegenden Erfindung liegt die Aufgabe zugrunde, eine Meßvorrichtung der eingangs genannten Art zu entwickeln, die sich vor allem durch geringen Herstellungs- und Montageaufwand sowie durch hohe Zuverlässigkeit auszeichnet.

Es hat sich herausgestellt, daß diese Aufgabe mit der im Anspruch 1 beschriebenen Erfindung gelöst werden kann, deren Besonderheit darin besteht, daß die permanentmagnetischen Areale mit abwechselnder Polarität aufeinanderfolgen und mittels in der Reifenwandung eingelagertem, magnetisierbarem und in der Gummimasse fein verteiltem Material auf Basis von Barium-Ferrit ausgebildet sind. Desweiteren weist der Meßwertaufnehmer zwei oder mehrere in Drehrichtung des Rades örtlich versetzt und im unterschiedlichen radialen Abstand von der Drehachse angeordnete Meßelemente auf, mittels deren bei einer Verformung des Reifens infolge der an dem Reifen angreifenden Kräfte bzw. infolge der übertragenen Antriebsoder Bremsmomente eine Verschiebung der Phasenlage zwischen den von den Meßelementen abgegebenen Meßsignalen auftritt, wobei diese Verschiebung der Phasenlage als ein Maß für die von dem Rad und dem Reifen auf die Fahrbahn übertragenen Momente und/oder als Maß für den momentanen Reibbeiwert auswertbar ist.

Die Erfindung beruht also auf der Erkenntnis, daß als Meßwertgeber eine direkt in die Reifenwandung eingelagerte magnetisierte Spur verwendet werden kann. Durch die erfindungsgemäße Ausbildung der Spur mittels magnetisierbarem und in der Gummimasse fein verteiltem Material auf Basis von Barium-Ferrit ist es möglich, die Meßvorrichtung besonders kostengünstig und einfach herzustellen. Barium-Ferrit besitzt gute Fließeigenschaften in der Gummimasse und weist eine hohe Magnetisierbarkeit auf. Dadurch kann es leicht und präzise magnetisiert und nur schwer wieder entmagnetisiert werden. Desweiteren kann, wenn zwei oder mehrere örtlich versetzte Sensoren bzw. Meßelemente verwendet werden, zusätzlich zu der Messung der Dreh- oder Winkelbewegungen die Torsionsbeanspruchung des Reifens bzw. der Reifenwandung zur Messung der übertragenen Momente und/oder des momentanen Kraftschlußbeiwertes ausgewertet werden.

In den beigefügten Unteransprüchen sind noch andere Ausführungsbeispiele der Erfindung beschrieben.

Weitere Einzelheiten, Vorteile und Anwendunghsmöglichkeiten der Erfindung gehen aus der folgenden Beschreibung anhand der beigefügten Abbildungen hervor.

Es zeigen in schematisch vereinfachter Darstellung
- Fig. 1: eine Seitenansicht eines Reifens nach der Erfindung mit in der Reifenwandung eingelagerten, magnetisierten Arealen,
- Fig. 2: in gleicher Darstellungsweise ein weiteres Ausführungsbeispiel eines Reifens,
- Fig. 3: im Schnitt ein Fahrzeugrad mit einer Vorrichtung nach der Erfindung und mit Elementen der zugehörigen Radaufhängung,
- Fig. 4: in symbolischer Darstellung einen Ausschnitt aus der Reifenwandung und das Ausgangssignal eines Meßwertaufnehmers sowie
- Fig. 5: in gleicher Darstellungsweise wie Fig. 3 den Reifenausschnitt und das Signal bei erhöhter Belastung des Reifens.

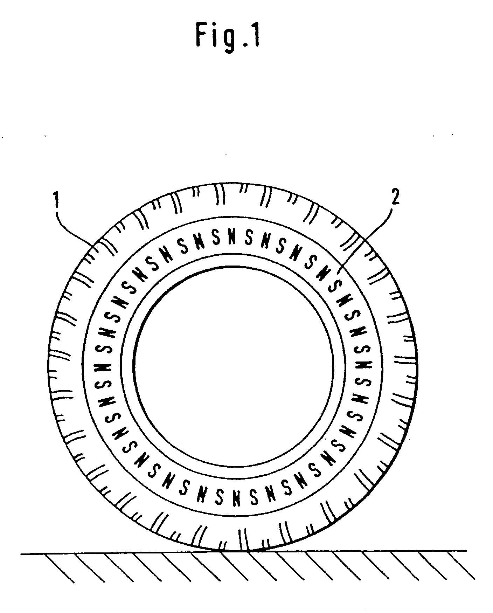

Fig. 1 zeigt ein Beispiel eines Reifens 1 mit über den gesamten Umfang gleichmäßig verteilt angeordneten, permanentmagnetischen Arealen N,S. In die Seitenwandung des Luftreifens 1 ist eine ganzzahlige Folge gleichartiger, einander abwechselnder Nord- und Südpol-Areale N bzw.S eingebettet, die eine geschlossene, zum Radmittelpunkt konzentrische Kreisbahn oder magnetisierten Spur 2 bilden. Eine solche Ausführungsform ist in Verbindung mit einem stationären Meßwertaufnehmer zur Messung des Drehverhaltens eines Fahrzeugrades z.B. als Eingangsgröße eines Kraftfahrzeug-Regelungssystems (ABS, ASR, ASMS etc.) geeignet. Die in die Reifenwandung integrierten oder auf der Reifenwandung angeordneten, magnetisierten Areale N,S dienen als Signal- oder Meßwertgeber.

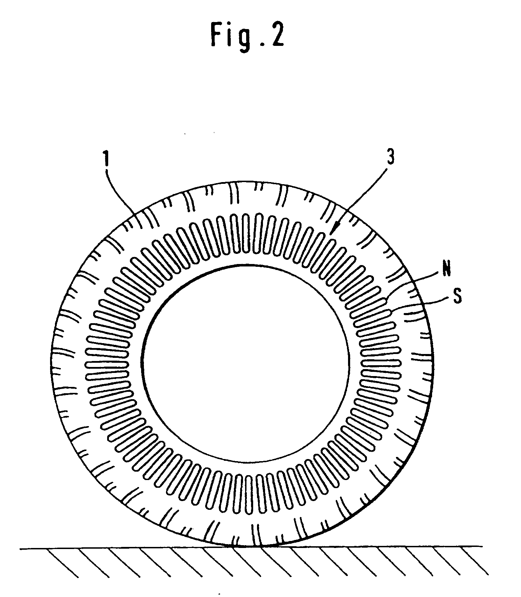

Mit der Ausführungsform nach Fig. 2 ist eine noch höhere Winkelauflösung zu erreichen. Der Encoder in Form einer kreisförmige Kodier-Spur 3 besteht in diesem Fall aus linienförmigen Nord- und Südpolen bzw. magnetisierten Arealen N,S, die, wie in dem Beispiel nach Fig.1, einander abwechseln. Eine solche Ausführungsform ist als Signalgeber oder Encoder für eine die erfindungsgemäße Vorrichtung besonders geeignet.

Zur Abtastung der aus den magnetischen Arealen N,S gebildeten Spuren 2,3 wird ein relativ zu dem Reifen bzw. der kodierten Spur ortsfest angeordneter Meßwertaufnehmer 4 verwendet. Besonders geeignet sind aktive Sensoren oder Meßelemente mit magnetoresistiven Sensorelementen oder mit Hallelementen. Grundsätzlich können jedoch alle Arten von Signalaufnehmer oder Sensortypen eingesetzt werden, die auf permanentmagnetische Felder, die Änderung dieser Felder oder auf Polaritätswechsel reagieren. Natürlich ist es auch möglich, passive Signalaufnehmer oder Spulensysteme einzusetzen, in denen durch die Änderung des Magnetfeldes infolge der Drehung des Reifens Signale induziert werden.

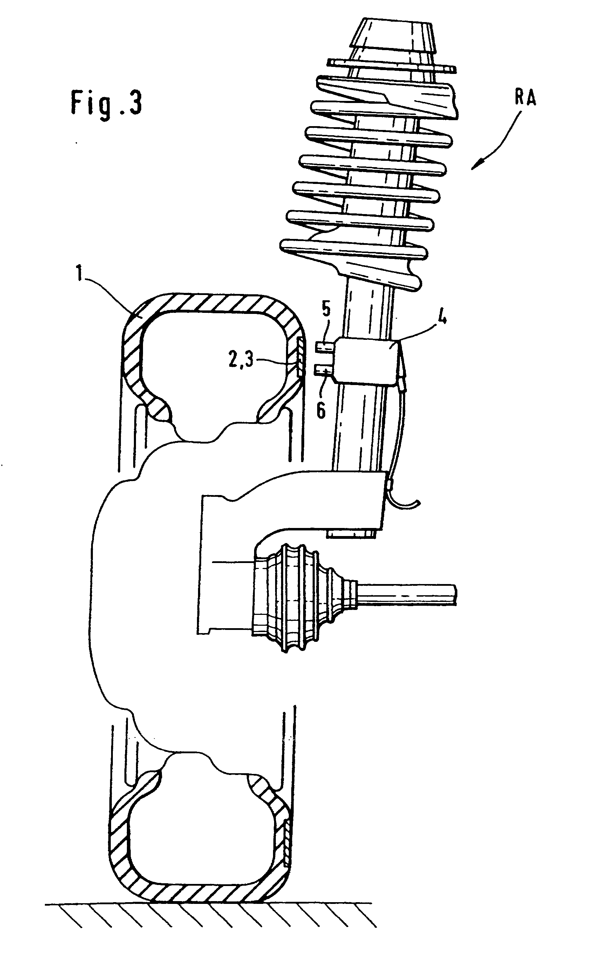

Die Fig. 3 ,4 und 5 dienen zur Erläuterung einer besonders vorteilhaften Ausführungsform der erfindungsgemäßen Vorrichtung. In diesem Fall ist, wie Fig. 3 zeigt, in Höhe der Reifenwandung bzw. in Höhe der Spur 2,3 an der Radaufhängung RA - oder an einem geeigneten mit dem Fahrzeug verbundenen Halter - ein Meßwertaufnehmer 4 mit zwei Meßelementen 5,6 angeordnet. Beispielsweise können beide Meßelemente 5,6 als magnetfeldempfindliche Körper magnetoresistive Sensorelemente enthalten.

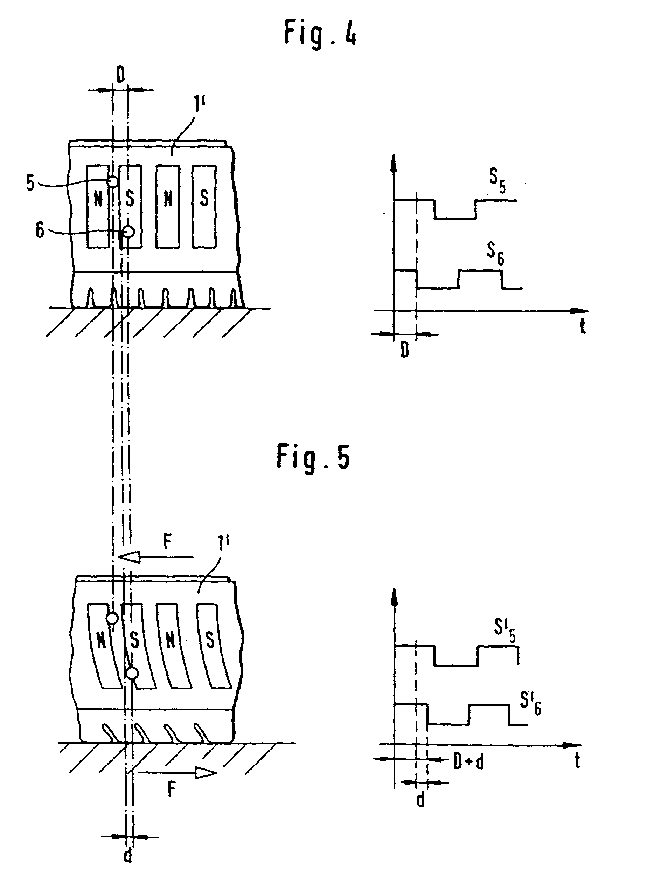

Die beiden Meßelemente 5,6 sind örtlich versetzt angeordnet, wie dies die in den Fig. 4,5 jeweils links dargestellten Reifenausschnitte 1' veranschaulichen. Mit 5',6' sind in Fig.4 die "Lese"-Punkte der Sensoren bzw. Meßelemente 5,6 bezeichnet. Die örtliche Versetzung D - siehe Fig. 4 - wird so gewählt, daß zwischen den Lesepunkten 5' und 6' eine bestimmte Anzahl von Polpaaren N,S eingeschlossen wird.

Die um die Strecke D gegeneinander versetzten Meßelemente 5,6 liefern in diesem Fall, wie dies der Verlauf der Meßelement- Ausgangssignale S₅, S₆ in dem Kurvendiagramm nach Fig.4 zeigt, bei jeder Raddrehbewegung zeitlich gegeneinander versetzte Signale, aus denen das Drehverhalten - Drehzahl, Beschleunigung, Verzögerung und Drehrichtung - zu erkennen oder zu errechnen ist.

Bekanntlich führen die auf ein Fahrzeugrad ausgeübten Antriebs- oder Bremsmomente zu einer Verformung des Reifens in der in Fig. 5 symbolisch dargestellten Weise. Unter dem Einfluß des Kräftepaares F - siehe Fig. 5 - wird die Reifenwandung 1' und damit zugleich die Richtung der magnetisierten Areale N,S oder Streifen 3 (siehe Fig. 2) in Torsionsrichtung verformt.

Gegenüber den ortsfest angeordneten Meßelementen 5,6 - siehe Fig. 3 - tritt infolge dieser torsionsbedingten Verformung ein relativer örtlicher Versatz d der magnetisierten Streifen oder Areale N,S, insbesondere in der latschnahen Zone jedes Streifens auf. Diese Verformung hat eine Veränderung der gegenseitigen Phasenlage der Signale S₅,S'₅ und S₆,S'₆ zur Folge. Diese Phasenverschiebung der Signale ist durch Vergleich der Figuren 4 und 5 besonders deutlich erkennbar.

Zur Auswertung der Phasenverschiebung wird der Zusammenhang zwischen dem von dem Rad auf die Straße übertragenen Moment M und der Phasenverschiebung D + d zweckmäßigerweise als Tabelle in einem Speicher der (nicht dargestellten) Auswerteelektronik erfaßt und zur Auswertung des Signals herangezogen.

Die Messung des Momentes M mit der erfindungsgemäßen Vorrichtung auf Basis der anhand der Fig.4 und 5 erläuterten physikalischen Gegebenheiten läßt sich zur Verbesserung eines Regelungssystems auswerten, da aus diesen Meßwerten auf den Kraftschlußbeiwert oder Reibbeiwert zwischen Reifen und Straße geschlossen werden kann.

Zur Realisierung der magnetisierbaren Areale wird im Herstellungsprozeß des Reifens eine geringe Menge von Barium-Ferrit-Pulver, erforderlichenfalls versetzt mit einem Strontium-Anteil, in homogener Verteilung eingefügt. Alternativ hierzu ist es auch möglich, z.B. ca. 1 mm dicke Gummifolien, in die das magnetisierbare Material eingebracht ist, zur Ausbildung der kodierten Spur bzw. der magnetisierbaren Areale N,S zu verwenden. Diese Gummifolie wird dann auf die seitliche Reifenwandung - siehe Fig. 3 - aufgeklebt und magnetisiert.

## Patentansprüche

1. Vorrichtung zur Ermittlung des Drehverhaltens eines Fahrzeugrades, bestehend aus einem Encoder, der mit dem Rad umläuft und der permanentmagnetische Areale enthält, die in Umfangsrichtung des Rades gleichmäßig verteilt angeordnet sind und mit abwechselnder Polarität aufeinanderfolgen, aus einem stationären, magnetfeldempfindlichen Messwertaufnehmer, der ein die Drehbewegung darstellendes Signal liefert, und aus elektrischen Schaltungen zur Auswertung der Ausgangssignale des Messwertaufnehmers, **dadurch gekennzeichnet, dass** eine einzelne Spur der permanentmagnetischen Areale (N,S) streifenförmig ausgebildet und in die Reifenwandung (1,1') des Fahrzeugrades eingelagert oder auf der Reifenwandung aufgebracht sind,
dass die permanentmagnetischen Areale (N,S) in radialer Richtung in Relation zu ihrem Abstand in Umfangsrichtung langgestreckt ausgebildet sind,
dass der Messwertaufnehmer(4) mindestens zwei Messelemente(5,6) enthält,
dass der radiale Abstand der Messelemente(5,6) näherungsweise der Länge der Areale entspricht, derart, dass bei einer Verformung des Reifens infolge der an dem Reifen angreifenden Kräfte(F) bzw. infolge der übertragenen Antriebs- oder Bremsmomente eine Änderung (d) der Phasenlage zwischen den von den Messelementen (5,6) abgegebenen Messsignalen(S₅, S₅',S₆,S₆') auftritt, und dass diese Änderung (d) der Phasenlage als Maß für die von dem Rad und dem Rei fen (1,1') auf die Fahrbahn übertragenen Momente und/oder des momentanen Reibbeiwertes auswertbar ist.

2. Vorrichtung nach Anspruch 1, **dadurch gekennzeichnet, dass** zwei in Drehrichtung örtlich versetzt angeordnete Messelemente (5,6) vorhanden sind.

3. Vorrichtung nach Anspruch 2, **dadurch gekennzeichnet, dass** der Abstand der beiden Messelemente (5,6) in Drehrichtung des Rades derart gewählt ist, daß sich mindestens ein Polpaar (N,S), vorzugsweise mehrere Polpaare, zwischen den Messelementen (5,6) befinden.

4. Vorrichtung nach einem oder mehreren der Ansprüche 1 bis 3, **dadurch gekennzeichnet, dass** der Messwertaufnehmer (4) als aktiver Messwertaufnehmer ausgebildet ist und magnetfeldempfindliche Messelemente (5,6) auf Basis von magnetoresistiven Sensorelementen oder von Halleffekt-Sensorelementen enthält.

5. Vorrichtung nach einem oder mehreren der Ansprüche 1 bis 4, **dadurch gekennzeichnet, dass** der Messwertaufnehmer (4) als passiver Messwertaufnehmer ausgebildet ist und Messelemente (5,6) auf Basis von Induktionsspulen enthält, in denen die permanentmagnetischen Areale ein der Dreh- oder Winkelbewegung des Rades entsprechendes, diese Bewegung darstellendes Signal hervorrufen.

6. Vorrichtung nach einem oder mehreren der Ansprüche 1 bis 5, **dadurch gekennzeichnet, dass** die permanentmagnetischen Areale (N, S) in einer Spur (2, 3) angeordnet sind.

7. Vorrichtung nach einem oder mehreren der Ansprüche 1 bis 6, **dadurch gekennzeichnet, dass** das magnetisierbare Material auf Basis von Barium-Ferrit mit einem Strontium-Anteil versetzt ist.

8. Vorrichtung nach einem oder mehreren der Ansprüche 1 bis 7, **dadurch gekennzeichnet, dass** das magnetisierbare Material während des Herstellungsprozesses in die Gummimasse eingelagert und nach der Fertigstellung des Reifens zur Ausbildung der permanentmagnetischen Areale (N, S) magnetisiert worden ist.

## Claims

1. Device for detecting the rotational behaviour of a vehicle wheel, which includes an encoder rotating with the wheel and having permanent magnet areas that are evenly distributed in a circumferential direction of the wheel and succeed each other with alternating polarity, a stationary measurement transducer sensitive to magnetic fields and furnishing a signal representative of the rotational movement, and electric circuits to evaluate the output signals of the measurement transducer,
**characterized in that** one single track of the permanent magnet areas (N, S) has a strip-shaped design, said areas being embedded into the tire wall (1, 1') of the vehicle wheel or applied to the tire wall,
**in that** the permanent magnet areas (N, S) in a radial direction have an elongated configuration in relation to their distance in a circumferential direction,
**in that** the measurement transducer (4) includes at least two measuring elements (5, 6),
**in that** the radial distance of the measuring elements (5, 6) approximately equals the length of the areas in such a manner that upon distortion of the tire as a result of forces (F) acting upon the tire or due to the drive or brake torques transmitted, there is a change (d) of the phase position between the measurement signals (S₅, S₅', S₆, S₆') issued by the measuring elements (5, 6), and **in that** said change (d) of the phase position can be evaluated as a measure of the torques transmitted from the wheel and the tire (1, 1') to the road surface and/or as a measure of the instantaneous coefficient of friction.

2. Device as claimed in claim 1,
**characterized in that** there is provision of two measuring elements (5, 6) which are offset in relation to each other in the direction of rotation.

3. Device as claimed in claim 2,
**characterized in that** the distance of the two measuring elements (5, 6) in the direction of rotation of the wheel is chosen so that at least one pole pair (N, S), preferably a plurality of pole pairs, are disposed between the measuring elements (5, 6).

4. Device as claimed in any one or more of claims 1 to 3,
**characterized in that** the measurement transducer (4) is configured as an active measurement transducer and includes magnetic-field-sensitive measuring elements (5, 6) on the basis of magnetoresistive sensor elements or Hall effect sensor elements.

5. Device as claimed in any one or more of claims 1 to 4,
**characterized in that** the measurement transducer (4) is configured as a passive measurement transducer and includes measuring elements (5, 6) on the basis of inductive windings in which the permanent magnet areas induce a signal representative of the rotational or angular movement of the wheel and indicative of this movement.

6. Device as claimed in any one or more of claims 1 to 5,
**characterized in that** the permanent magnet areas (N, S) are arranged in a track (2, 3).

7. Device as claimed in any one or more of claims 1 to 6,
**characterized in that** the magnetizable material on the barium-ferrite basis is compounded with a strontium portion.

8. Device as claimed in any one or more of claims 1 to 7,
**characterized in that** the magnetizable material is embedded into the rubber substance during the manufacturing process and magnetized after completion of the tire for the provision of the permanent magnet areas (N, S).

## Revendications

1. Ensemble à déterminer le comportement rotatoire d'une roue de véhicule, prévu d'un codeur tournant avec la roue et contenant des aires magnétiques-permanentes disposées de manière distribuée uniformément dans le sens circonférentiel de la roue et succédant de polarité alternante, d'un capteur de mesure fixe et sensible au champ magnétique et produisant un signal représentant le mouvement de rotation, et de circuits électriques pour évaluer les signaux de sortie du capteur de mesure,
**caractérisé en ce qu'**une piste isolée des aires magnétiques-permanentes (N, S) est sous forme striée en étant encastrée dans la paroi du pneu (1,1') de la véhicule ou disposée sur la paroi du pneu,
que les aires (N, S) magnétiques-permanentes dans le sens radial relatif à leur distance sont sous forme allongée dans le sens circonférentiel,
que le capteur de mesure (4) comporte au moins deux éléments de mesure (5,6),
que la distance radiale des éléments de mesure (5,6) correspond près de longueur des aires ainsi qu'au cas de déformation du pneu en conséquence des forces (F) appliquées au pneu ou en conséquence des moments de moteur ou de freinage transférés, un changement (d) des phases s'élève entre les signaux de mesure (S₅, S₅' S₆, S₆') produits par des éléments de mesure (5,6), et
que ce changement (d) des phases est évaluable comme mesure pour les moments et/ou le coefficient du frottement instantané transférés par la roue et du pneu (1,1') à la voie.

2. Ensemble selon la revendication 1, **caractérisé en ce que** deux éléments de mesure (5,6) sont prévus disposés de manière localement décalée dans le sens de rotation.

3. Ensemble selon la revendication 2, **caractérisé en ce que** la distance entre les deux éléments de mesure (5,6) dans le sens de rotation de la roue est choisie, de sorte que au moins une paire polaire (N,S), de préférence plusieurs de paire polaire, soient prévues entre les éléments de mesure (5,6).

4. Ensemble selon l'une ou plusieurs de revendications 1 à 3, **caractérisé en ce que** le capteur de mesure (4) est sous forme d'un capteur de mesure actif contenant des éléments de mesure (5,6) sensible au champ magnétique sur la base des éléments de palpeur magnetorésistants ou des éléments de palpeur d'effet Hall.

5. Ensemble selon l'une ou plusieurs de revendications 1 à 4, **caractérisé en ce que** le capteur de mesure (4) est sous forme d'un capteur de mesure passif contenant des éléments de mesure (5,6) sur la base de bobines inductrices dans lesquelles les aires magnétiques-permanentes forment un signal correspondant au mouvement de rotation ou angulaire de la roue et représentant ce mouvement.

6. Ensemble selon l'une ou plusieurs de revendications 1 à 5, **caractérisé en ce que** les aires (N,S) magnétiques-permanentes sont disposées dans une piste (2,3).

7. Ensemble selon l'une ou plusieurs de revendications 1 à 6, **caractérisé en ce que** la matière magnétisable est imprégnée sur la base de ferrite de baryte avec un part de strontium.

8. Ensemble selon l'une ou plusieurs de revendications 1 à 7, **caractérisé en ce que** la matière magnétisable pendant le procédé de fabrication est déposée dans la masse en caoutchouc et après l'achèvement du pneu est magnétisée pour former les aires (N,S) magnétiques-permanentes.
